# EUROPÄISCHE PATENTSCHRIFT

(11) **EP 3 368 365 B1**
(45) Veröffentlichungstag und Bekanntmachung des Hinweises auf die Patenterteilung: **29.06.2022**
(21) Anmeldenummer: 16787400.7
(22) Anmeldetag: 21.10.2016
(51) Int. Cl.: B60K 15/03, B60K 15/077

(54) **SATTELTANK MIT SCHWAPPSPERRE**
SADDLE TANK WITH SWASH BARRIER
RÉSERVOIR MONTÉ EN SELLE COMPRENANT UN DISPOSITIF ANTIBALLOTEMENT

(30) Priorität: 31.10.2015 DE 102015221366
(43) Veröffentlichungstag der Anmeldung: 05.09.2018
(73) Patentinhaber: TI Automotive Technology Center GmbH, 76437 Rastatt (DE)
(72) Erfinder: BOECKER, Albert J., 76275 Ettlingen (DE); EHLER, Alex, 76437 Rastatt (DE); SCHAEFER, Thorsten, 76829 Landau Landau (DE)
(74) Vertreter: Pfiz/Gauss Patentanwälte PartmbB
(86) Internationale Anmeldenummer: PCT/EP2016/075379
(87) Internationale Veröffentlichungsnummer: WO 2017/072041

(56) Entgegenhaltungen:
- WO-A1-2007/131974
- DE-A1-102004 051 890
- DE-A1-102007 039 861
- DE-A1-102014 202 361

## Beschreibung

Die Erfindung betrifft einen Satteltank für Kraftfahrzeuge, mit zwei über eine verjüngte Mittelpartie in ihrem oberen Bereich miteinander verbundenen Kammern, wobei die erste Kammer eine Zutrittsöffnung für die Betankung aufweist und wobei in der zweiten Kammer ein Füllstandsbegrenzungsventil angeordnet ist.

Bei einem Satteltank mit seinen zwei Kammern kommt es vor, dass in den Kammern ein unterschiedlicher Kraftstoffpegel vorhanden ist, beispielsweise durch Schwappbewegungen aufgrund dynamischer Fahrzustände. Problematisch ist eine Situation, in der kurz vor einem geplanten Tankvorgang eine größere Menge Kraftstoff in die zweite Kammer gelangt und dort das Füllstandsbegrenzungsventil betätigt, beispielsweise durch eine Schräglage des Fahrzeugs oder durch Querbeschleunigung. Der Satteltank kann dann nicht mehr betankt werden, weil das Füllstandsbegrenzungsventil für einen wiederholten Abbruch des Tankvorgangs sorgt. Unerwünscht ist dies vor allem bei Mietwagen, die üblicherweise vor der Rückgabe vollgetankt werden sollen, um hohe Zusatzgebühren für ein nur teilweise betanktes Fahrzeug zu vermeiden. Dem könnte dadurch begegnet werden, dass auch in der ersten Kammer ein Füllstandsbegrenzungsventil vorgesehen wird, was jedoch mit einem konstruktiven Zusatzaufwand und vergleichsweise hohen Zusatzkosten verbunden ist. Wünschenswert ist ein preisgünstiges, mechanisch einfaches System, dass das vorgenannte Problem verhindert. Eine aus der EP 2 653 333 A1 bekannte Einrichtung umfasst eine schwenkbare Klappe im Bereich der Mittelpartie, die das Überschwappen aus der zweiten Kammer in die erste Kammer und das Einströmen von Kraftstoff von der ersten Kammer in die zweite Kammer beim Betanken erlauben soll, ein Überschwappen von der ersten Kammer in die zweite Kammer jedoch verhindern soll. Dabei wird davon ausgegangen, dass eine Schwappbewegung von der ersten Kammer zur zweiten Kammer ein plötzliches Ereignis darstellt, während die Strömungsrate beim Betanken wesentlich kleiner ist. Eine genaue Abstimmung, wann die Klappe ein Überströmen erlauben soll und wann nicht, ist jedoch schwierig und nicht für alle Situationen sicherzustellen. Bei einer allmählichen Schrägstellung etwa kann die Strömungsrate von der ersten Kammer in die zweite Kammer so gering sein, dass die Klappe nicht betätigt wird und der oben beschriebene, unerwünschte Fall eintritt. Auch kann ein sich möglicherweise im Tank von einer Befestigung lösendes oder bewegendes Teil, wie zum Beispiel ein Hebelgeber, die Klappe blockieren, so dass deren Funktion gestört ist. Bei einer aus der DE 10 2004 051 890 A1 bekannten Vorrichtung der eingangs genannten Art wird ein Kugelventil verwendet, welches ebenfalls anfällig für mögliche Fehlfunktionen ist.

Ausgehend hiervon besteht die Aufgabe der vorliegenden Erfindung darin, einen Satteltank der eingangs genannten Art bereitzustellen, bei dem ein unerwünschtes Übertreten von Kraftstoff von der ersten Kammer zur zweiten Kammer auf einfache Weise zuverlässig verhindert wird.

Zur Lösung dieser Aufgabe wird die im Patentanspruch 1 angegebene Merkmalskombination vorgeschlagen. Vorteilhafte Ausgestaltungen und Weiterbildungen der Erfindung ergeben sich aus den abhängigen Ansprüchen.

Die Erfindung ist von dem Bestreben geleitet, bewegliche Teile zur Lösung der Aufgabe zu vermeiden, um den dem Stand der Technik anhaftenden Nachteilen aus dem Weg zu gehen. Der Grundgedanke ist daher, den Ort, an dem ein gewolltes Überströmen von der ersten Kammer zur zweiten Kammer beim Betanken stattfindet, dort vorzusehen, wo ein ungewolltes Überschwappen oder Überströmen nicht stattfinden kann. Gemäß der Erfindung ist zwischen den zwei Kammern ein Trennkörper angeordnet, der eine sich zwischen einer oberen und einer unteren Wandpartie über die gesamte Breite der Mittelpartie erstreckende Trennwand und ein sich von einer Öffnung in der Trennwand in die erste Kammer hinein erstreckendes Rohr aufweist, das eine Fluidkommunikation zwischen der ersten und der zweiten Kammer erlaubt wobei dass sich das Rohr so weit in die erste Kammer hinein erstreckt, dass ein Überschwappen von der ersten Kammer in die zweite Kammer, ohne bewegliche Teile zu benutzen, verhindert ist. Die Trennwand verhindert einen Flüssigkeitsaustausch zwischen den zwei Kammern gänzlich oder zumindest weitgehend, wenn eine hermetische Abdichtung nicht gegeben ist, während die Öffnung des Rohrs dort platziert wird, wo ein ansteigender Pegel in der ersten Kammer beim Betanken in das Rohr eintreten und Kraftstoff zur zweiten Kammer strömen kann. Schwappbewegungen oder ein in Richtung Mittelteil geneigter Pegel in der ersten Kammer erreichen die Öffnung des Rohrs jedoch nicht. Es sind dabei keine beweglichen Teile vorhanden, die verschleißen oder blockieren könnten. Bevorzugt erstreckt sich das Rohr im Wesentlichen senkrecht zur Trennwand, also parallel zu einer Flüssigkeitsoberfläche in einer Normallage des Tanks bzw. Fahrzeugs. Die Ausrichtung und Dimensionierung des Rohrs kann fahrzeugspezifisch den jeweiligen Bedürfnissen angepasst werden. Der Durchtrittsquerschnitt des Rohrs ist zweckmäßig so gewählt, dass betankungstypische Fließraten ohne Rückstau durch das Rohr hindurchtreten können.

Die Trennwand kann Teil eines in dem Satteltank angeordneten Trägers für Kraftstoffkomponenten sein. Derartige Träger werden für die Anordnung von Ventilen, das Führen von Leitungen und dergleichen im Tank angeordnet. Die Trennwand kann mit einem solchen Träger einstückig ausgebildet sein.

Alternativ kann die Trennwand mindestens eine Ausnehmung oder Durchbrechung aufweisen, mittels der sie an einem in dem Satteltank angeordneten Träger für Kraftstoffkomponenten angeordnet ist. Die Trennwand kann dann an den Träger angeklipst werden. Weitere Durchtrittsmöglichkeiten können für diverse Kabel und Leitungen vorgesehen sein. Die Trennwand kann über ein elastisches Element mit den umliegenden Wandungspartien des Tanks verbunden sein, so dass keine starre Ankopplung an die Tankwandung erfolgt, die die mechanische Stabilität des Tanks, beispielsweise eine gewisse Verformbarkeit bei Unfällen, unerwünscht beeinflussen könnte.

Die Trennwand und das Rohr können aus jedem geeigneten Material bestehen, insbesondere aus einem preiswerten Kunststoffmaterial. Auf eine Kompatibilität zu dem Material des Tanks, beispielsweise zu Verschweißungszwecken, kommt es nicht an.

Im Folgenden wird die Erfindung anhand eines in der Zeichnung in schematischer Weise dargestellten Ausführungsbeispiels näher erläutert. Es zeigen
- Fig. 1: einen Satteltank im unbefüllten Zustand mit einem Trennkörper zwischen der ersten und der zweiten Kammer;
- Fig. 2: den Satteltank gemäß Fig. 1 in einem teilbefüllten Zustand;
- Fig. 3: den Satteltank gemäß Fig. 1 im vollständig befüllten Zustand;
- Fig. 4: den zumindest teilweise befüllten Satteltank gemäß Fig. 1 bei starker Querbeschleunigung; und
- Fig. 5: eine perspektivische Ansicht des Trennkörpers.

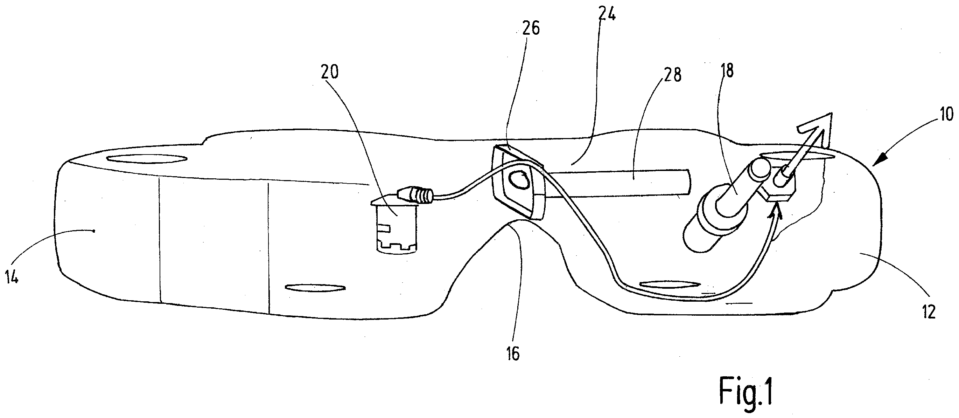

Der in Fig. 1 dargestellte Satteltank 10 weist eine erste Kammer 12 und eine zweite Kammer 14 auf, die durch eine verjüngte Mittelpartie 16 in ihren oberen Bereichen miteinander verbunden sind. An die erste Kammer 12 ist ein Einfüllrohr 18 zum Befüllen des Satteltanks 10 angeschlossen. In der zweiten Kammer 14 ist ein Füllstandsbegrenzungsventil 20 (FLV, fill limit valve, oder FLVV, fill limit vent valve) angeordnet, dass einen Betankungsvorgang in wohlbekannter Weise unterbricht, wenn in der zweiten Kammer 14 ein vorbestimmter Kraftstoffpegel erreicht ist. Der Freiraum 22 zwischen den zwei Kammern 12, 14, unterhalb der Mittelpartie 16, ist für den Durchtritt einer Antriebswelle bei allrad- oder heckgetriebenen Fahrzeugen, Teilen des Abgassystems und dergleichen bestimmt. Im Bereich der Mittelpartie 16 ist ein Trennkörper 24 angeordnet, der im Wesentlichen aus einer Trennwand 26 und einem an eine nicht näher dargestellte Öffnung in der Trennwand 26 anschließenden, sich in die erste Kammer 12 erstreckenden Rohr 28 besteht. Die Trennwand 26 verschließt den Durchtrittsquerschnitt der Mittelpartie 16 zumindest soweit, dass keine nennenswerte Flüssigkeitsströmung an ihr vorbei möglich ist. Der Satteltank 10 befindet sich in Fig. 1 in einem nicht befüllten Zustand.

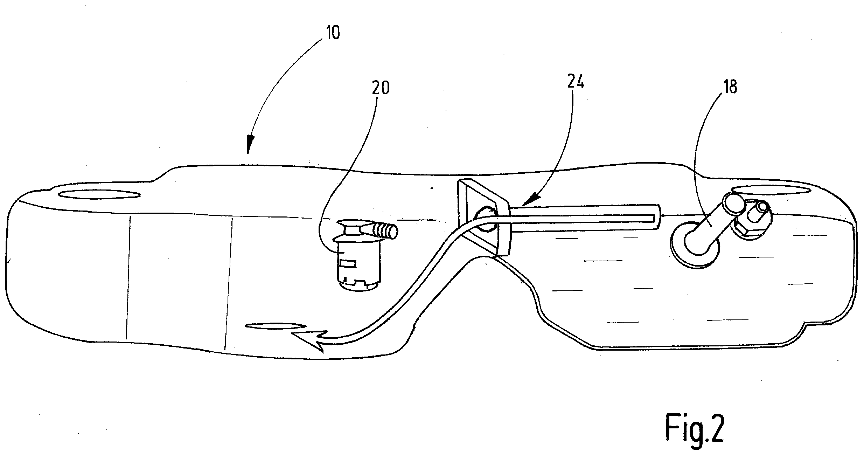

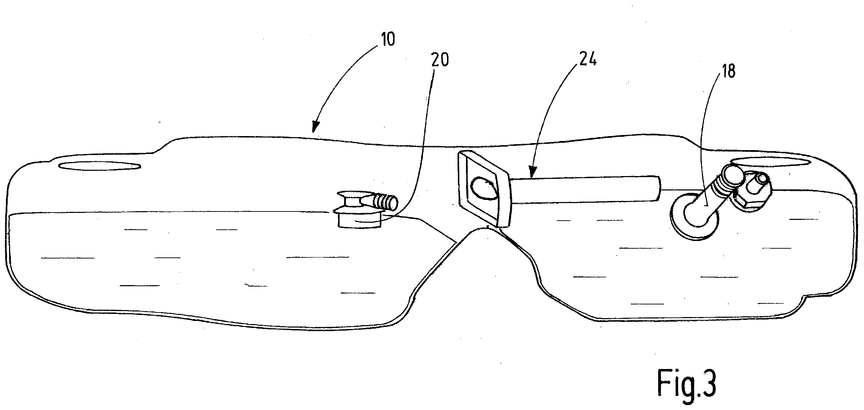

Fig. 2 zeigt den Satteltank 10 bei einem Befüllvorgang zu dem Zeitpunkt, an dem Kraftstoff in der ersten Kammer 12 soweit angestiegen ist, dass der Pegel der Öffnung des Rohrs 28 erreicht ist und der Kraftstoff dann durch dieses in die zweite Kammer 14 strömt, bis der dortige Pegel die Auslöseschwelle des Füllstandsbegrenzungsventils 20 erreicht. Dieser Zustand ist in Fig. 3 dargestellt. Der Öffnungsquerschnitt des Rohrs 28 ist derart bemessen, dass er keinen nennenswerten Strömungswiderstand gegen das Befüllen der zweiten Kammer 14 darstellt, der Betankungsvorgang also wie bei einem herkömmlichen Satteltank stattfindet.

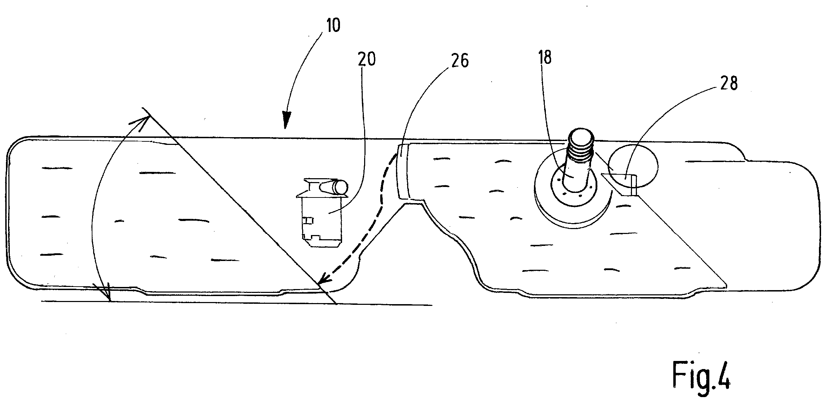

Fig. 4 zeigt den Satteltank 10 bei einer Querbeschleunigung, in der der Kraftstoff in den Kammern 12, 14 nach links verdrängt wird. Flüssiger Kraftstoff staut sich in der ersten Kammer 12 an der Trennwand 26 des Trennkörpers 24 auf, wobei die Öffnung des Rohrs 28 in den Freiraum ragt, so dass kein flüssiger Kraftstoff über das Rohr 28 in die zweite Kammer 14 gelangen kann. Das unerwünschte Überschwappen von Kraftstoff in die zweite Kammer 14, das bei einem nachfolgenden Betankungsvorgang ein frühzeitiges oder sofortiges Auslösen des Füllstandsbegrenzungsventils 20 bewirken könnte, wird damit verhindert.

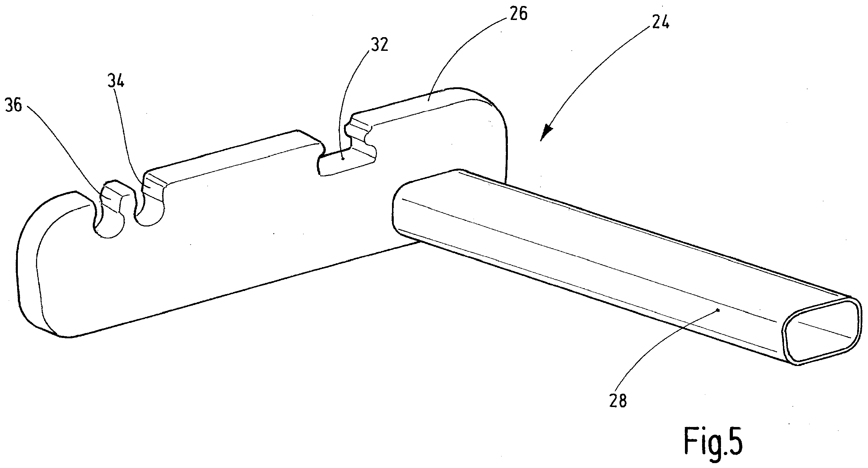

Fig. 5 zeigt den Trennkörper 24 mit seiner Trennwand 26 und dem Rohr 28 in vergrößerter Darstellung. Die Trennwand 26 weist eine Reihe von Ausnehmungen 32 - 36 auf, die für den Durchtritt verschiedener Leitungen und Kabel und für die Verbindung an einen nicht näher dargestellten Komponententräger bestimmt sind. Alternativ kann die Trennwand 26 auch einstückig mit einem Komponententräger ausgebildet sein. Die Ausnehmungen (32 - 36) sind so dimensioniert, dass sie durch die Aufnahme der zugeordneten Komplementärteile weitestgehend ausgefüllt werden, dass also keine nennenswerten Kraftstoffmengen in der in Fig. 4 dargestellten Situation hindurchtreten können.

Zusammenfassend ist folgendes festzustellen: Die Erfindung betrifft einen Satteltank 10 für Kraftfahrzeuge, mit zwei über eine verjüngte Mittelpartie 16 in ihrem oberen Bereich miteinander verbundenen Kammern 12, 14, wobei die erste Kammer 12 eine Zutrittsöffnung 18 für die Betankung aufweist und wobei in der zweiten Kammer 14 ein Füllstandsbegrenzungsventil 20 angeordnet ist. Um ein ungewolltes Überschwappen von Kraftstoff von der ersten Kammer 12 in die zweite Kammer 14 zu verhindern, ist gemäß der Erfindung vorgesehen, dass zwischen den zwei Kammern 12, 14 ein Trennkörper 24 angeordnet ist, der eine sich zwischen einer oberen und einer unteren Wandpartie über die gesamte Breite der Mittelpartie 16 erstreckende Trennwand 26 und ein sich von einer Öffnung in der Trennwand 26 in die erste Kammer 12 hinein erstreckendes Rohr 28 aufweist, das eine Fluidkommunikation zwischen der ersten und der zweiten Kammer 12, 14 erlaubt, wobei sich das Rohr 28 so weit in die erste Kammer 12 hinein erstreckt, dass ein Überschwappen von der ersten Kammer 12 zur zweiten Kammer 14, ohne bewegliche Teile zu benutzen, verhindert ist.

## Patentansprüche

1. Satteltank (10) für Kraftfahrzeuge, mit zwei über eine verjüngte Mittelpartie (16) in ihrem oberen Bereich miteinander verbundenen Kammern (12, 14), wobei die erste Kammer (12) eine Zutrittsöffnung (18) für die Betankung aufweist und wobei in der zweiten Kammer (14) ein Füllstandsbegrenzungsventil (20) angeordnet ist und wobei zwischen den zwei Kammern (12, 14) ein Trennkörper (24) angeordnet ist, **dadurch gekennzeichnet, dass** der Trennkörper (24) eine sich zwischen einer oberen und einer unteren Wandpartie über die gesamte Breite der Mittelpartie (16) erstreckende Trennwand (26) und ein sich von einer Öffnung in der Trennwand (26) in die erste Kammer (12) hinein erstreckendes Rohr (28) aufweist, das eine Fluidkommunikation zwischen der ersten und der zweiten Kammer (12, 14) erlaubt, wobei sich das Rohr (28) so weit in die erste Kammer (12) hinein erstreckt, dass ein Überschwappen von der ersten Kammer (12) zur zweiten Kammer (14), ohne bewegliche Teile zu benutzen, verhindert ist.

2. Satteltank (10) nach Anspruch 1, **dadurch gekennzeichnet, dass** die Trennwand (26) Teil eines in dem Satteltank (10) angeordneten Trägers für Kraftstoffkomponenten ist.

3. Satteltank (10) nach Anspruch 1, **dadurch gekennzeichnet, dass** die Trennwand (26) mindestens eine Ausnehmung (32 - 36) oder Durchbrechung aufweist, mittels der sie an einem in dem Satteltank (10) angeordneten Träger für Kraftstoffkomponenten angeordnet ist.

4. Satteltank (10) nach einem der Ansprüche 1 bis 3, **dadurch gekennzeichnet, dass** sich das Rohr (28) im Wesentlichen senkrecht zu der Trennwand (26) erstreckt.

## Claims

1. Saddle tank (10) for motor vehicles, comprising two chambers (12, 14) which are connected to one another in their upper region via a tapered central portion (16), the first chamber (12) having an access opening (18) for refueling, and a filling level limiting valve (20) being arranged in the second chamber (14), and a partition body (24) being arranged between the two chambers (12, 14), **characterized in that** the partition body (24) has a partition wall (26) which extends between an upper and a lower wall portion across the full width of the central portion (16), and a tube (28) which extends into the first chamber (12) from an opening in the partition wall (26), which tube allows fluid communication between the first and second chambers (12, 14), the tube (28) extending far enough into the first chamber (12) in order to prevent fuel from spilling over from the first chamber (12) into the second chamber (14) without using movable parts.

2. Saddle tank (10) according to claim 1, **characterized in that** the partition wall (26) is part of a carrier for fuel components that is arranged in the saddle tank (10).

3. Saddle tank (10) according to claim 1, **characterized in that** the partition wall (26) has at least one recess (32 - 36) or opening by means of which said wall is arranged on a carrier for fuel components that is arranged in the saddle tank (10).

4. Saddle tank (10) according to any of claims 1 to 3, **characterized in that** the tube (28) extends substantially perpendicularly to the partition wall (26).

## Revendications

1. Réservoir en forme de selle (10) pour véhicules automobiles, comportant deux chambres (12, 14) reliées l'une à l'autre dans leur zone supérieure au moyen d'une partie centrale (16) conique, dans lequel la première chambre (12) comporte une ouverture d'accès (18) pour le ravitaillement et dans lequel une soupape de limitation de niveau de remplissage (20) est disposée dans la seconde chambre (14) et dans lequel un corps de séparation (24) est disposé entre les deux chambres (12, 14), **caractérisé en ce que** le corps de séparation (24) comporte une paroi de séparation (26) s'étendant entre une partie de paroi supérieure et une partie de paroi inférieure sur toute la largeur de la partie centrale (16) et un tube (28) s'étendant dans la première chambre (12) à partir d'une ouverture dans la paroi de séparation (26), lequel tube assure une communication fluidique entre les première et seconde chambres (12, 14), dans lequel le tube (28) s'étend suffisamment loin dans la première chambre (12) de telle sorte qu'un déversement de la première chambre (12) vers la seconde chambre (14) est empêché sans utiliser de pièces mobiles.

2. Réservoir en forme de selle (10) selon la revendication 1, **caractérisé en ce que** la paroi de séparation (26) fait partie d'un support pour composants de carburant disposé dans le réservoir en forme de selle (10).

3. Réservoir en forme de selle (10) selon la revendication 1, **caractérisé en ce que** la paroi de séparation (26) comporte au moins un évidement (32 à 36) ou un passage au moyen duquel elle est disposée sur un support pour composants de carburant disposé dans le réservoir en forme de selle (10).

4. Réservoir en forme de selle (10) selon l'une quelconque des revendications 1 à 3, **caractérisé en ce que** le tube (28) s'étend sensiblement perpendiculairement à la paroi de séparation (26).
